(19) Europäisches Patentamt
European Patent Office
Office européen des brevets

(11) Numéro de publication: **0 169 166
B1**

(12) **FASCICULE DE BREVET EUROPEEN**

(45) Date de publication du fascicule du brevet:
**30.03.88**

(21) Numéro de dépôt: **85810267.6**

(22) Date de dépôt: **10.06.85**

(51) Int. Cl.⁴: **A 23 J 3/00,** A 23 J 1/00,
A 61 K 37/18

(54) **Procédé d'hydrolyse de matières protéiques d'origine animale ou végétale.**

(30) Priorité: **13.06.84 CH 2859/84**

(43) Date de publication de la demande:
**22.01.86 Bulletin 86/4**

(45) Mention de la délivrance du brevet:
**30.03.88 Bulletin 88/13**

(84) Etats contractants désignés:
**AT BE CH DE FR GB IT LI LU NL SE**

(56) Documents cités:
**DE - C - 673 203
GB - A - 1 494 856**

(73) Titulaire: **BATTELLE MEMORIAL INSTITUTE, 7 route de Drize, CH-1227 Carouge/Genève (CH)**

(72) Inventeur: **Armanet, Jean-Michel, 8, rue des Bossons, CH-1213 Onex (CH)**
Inventeur: **Giddey, Claude, 59 route de Chêne, CH-1208 Genève (CH)**
Inventeur: **Sachetto, Jean-Pierre, Rue des Chênes, F-74160 Saint-Julien-en-Génevois (FR)**

(74) Mandataire: **Dousse, Blasco et al, 7, route de Drize, CH-1227 Carouge/Genève (CH)**

## Description

La présente invention a pour objet un procédé d'hydrolyse acide de matières protéiques d'origine animale ou végétale.

On sait que par hydrolyse des matières protéiques telles que, par exemple, les déchets carnés, les déchets de poissons, les fibres animales comme la soie, le crin et les fourrures, les tourteaux de graines oléagineuses comme l'arachide, le soya, le coton et autres, la caséine, les protéines de bactéries et de levures, etc., on peut obtenir d'intéressants produits industriels tels qu'acides aminés et oligopeptides. De tels produits sont utiles dans l'industrie pharmaceutique (médicaments) et dans l'industrie alimentaire (fourrages pour animaux et alimentation humaine).

Pour effectuer une telle hydrolyse, on utilise généralement les acides minéraux en solution aqueuse concentrée, notamment l'acide chlorhydrique dont les avantages vis-à-vis des autres acides sont principalement dus à son prix relativement peu élevé et au fait que, par neutralisation, il donne du sel ce qui est acceptable dans les produits alimentaires (voir Industrie Alimentari (1978), 17 (4), 285 - 288). Cependant lorsqu'on utilise de l'acide chlorhydrique aqueux pour l'hydrolyse des matières protéiques, il est ensuite nécessaire pour obtenir des hydrolysats relativement concentrés, d'évaporer après coup une proportion importante de cet acide aqueux ce qui, de toute évidence, est défavorable au point de vue énergétique.

Par ailleurs, l'utilisation d'acide aqueux ne conduit, même avec des temps réactionnels de 10 à 20 heures à l'ébullition, qu'à des taux d'hydrolyse relativement peu élevés. Ainsi, dans le brevet britannique GB-A-1 494 856, il est indiqué que le pourcentage d'azote aminé par rapport au total de l'azote d'un hydrolysat de protéine, celle-ci ayant été soumise à une hydrolyse au moyen d'environ 1,7 moles d'acide chlorhydrique à 37%, est de 67%.

Pour obvier aux inconvénients susmentionnés, on a récemment proposé de remplacer l'acide chlorhydrique en solution aqueuse par du gaz chlorhydrique. Ainsi le document EP-A-25580 (BASF) décrit un procédé suivant lequel on traite une matière protéique préalablement séchée à un taux d'humidité inférieur à 20% par du HCl gazeux à une température ne dépassant pas 50°C ce qui fournit un produit d'addition matière protéique - HCl. L'addition ultérieure d'eau ou d'autres solutions hydrolisantes à ce produit d'addition permet à celui-ci de se transformer progressivement, à chaud ou à froid, en un hydrolysat de protéines et en acides aminés. Par ailleurs, suivant une variante de ce procédé de la technique antérieure, on peut également ajouter simultanément le gaz chlorhydrique et la vapeur d'eau ce qui permet d'obtenir directement un hydrolysat.

Malgré des avantages certains sur les méthodes antérieures, ce procédé récent présente encore quelques inconvénients qu'il était désirable d'éliminer, notamment la nécessité de sécher préalablement de manière relativement poussée (<20%) la matière protéique à traiter et de contrôler la température pendant l'addition de l'acide gazeux par un dispositif adéquat de refroidissement. Or, on sait qu'il n'est en général pas facile de maintenir la température d'une matière solide souvent volumineuse et floconneuse en dessous de certaines limites lorsqu'elle est le siège d'une réaction exothermique et qu'elle n'offre que peu de contacts thermiques avec les parois du récipient qui la contient.

Le présent procédé tel que défini à la revendication 1 remédie parfaitement à ces inconvénients. En effet, pour réaliser les conditions opératoires revendiquées, il n'est généralement pas nécessaire de prévoir un dispositif de refroidissement de la masse réactionnelle et, par ailleurs, la plupart des matières protéiques disponibles commercialement et pouvant être converties en hydrolisats de protéines ont un taux d'humidité naturel dépassant 20% en poids ce qui permet de les utiliser directement sans traitement préalable, ou après un séchage simplifié, par exemple par essorage ou exposition à l'air.

On notera également que le présent procédé présente encore l'avantage, par rapport à la technique antérieure, de fournir directement un produit hydrosoluble sans traitement ultérieur. Or, cela n'était pas le cas en ce qui concerne le produit d'addition protéine-HCl décrit dans le document EP-A-25580, ce produit devant, pour ensuite fournir un hydrolysat de protéines hydrosoluble, être malaxé avec de l'eau, un acide dilué ou un alcali dilué et la pâte ainsi réalisée étant ensuite chauffée entre 60 et 95°C afin qu'elle se transforme en une solution aqueuse. Le procédé de l'invention présente donc des avantages de simplicité et d'économie d'énergie par rapport à la technique antérieure; il est peu onéreux et fornit des hyrolysats de protéines d'excellente qualité utilisables, dans de nombreux cas, sans traitement ultérieur.

Finalement, le présent procédé ne réclame que des quantités relativement minimes de HCl, plus particulièrement lorsque la protéine à hydrolyser est peu humide, par exemple lorsqu'elle ne contient que de 20 à 30% d'humidité. En effet, il est bien évident que dans le cas de matière protéiques très humides, il faut ajouter une quantité de HCl sec plus grande que dans le cas d'une matière moins humide pour que le titre de la solution d'acide aqueux résultant de la dissolution du HCl gazeux dans l'eau contenue dans la matière à hydrolyser atteigne une valeur efficace. On notera à ce propos l'existence d'un document ancien (DE-C-673 203) qui décrit le traitement de matières protéiques (Keratine) par du HCl gazeux, ces matières ayant été préalablement mouillées avec de l'eau jusqu'à un taux d'humidité relativement élevé (80% ou plus). Dans de telles circonstances, l'addition de gaz chlorhydrique (dans les conditions de contrôle de température indiquées dans ce document) ne conduit pas à une hydrolyse poussée de la masse de protéine — celle-ci, à l'issu du traitement, étant insoluble dans l'eau — mais bien à la rupture sélective de certaines liaisons peptidiques (voir Col. 2, lignes 26 à 34). Dans la présente invention, au contraire, on cherche à faire en sorte qu'une proportion aussi grande que possible de la matière protéique de départ devienne hydrosoluble, c'est-à-dire pratiquement la totalité.

Un avantage additionnel de la présente invention est constitué par le fait qu'on peut, après la mise

en œuvre du traitement au HCl gazeux (la quantité ajoutée de celui-ci étant dans ce cas d'au moins 1 équivalent théorique par rapport aux acides aminés, c'est-à-dire environ 30% en poids de HCl par rapport au poids de protéines sèches) et sans ajouter d'eau ou autres réactifs supplémentaires, soumettre la masse liquéfiée résultant de cette hydrolyse à un chauffage en autoclave, cette opération ayant pour effet une libération totale des acides aminés des polypeptides de la matière de départ avec un rendement pratiquement quantitatif.

Pour mettre en œuvre le procédé de la présente invention, on peut par exemple placer la matière à hydrolyser dans un ballon de verre (au laboratoire) ou un réacteur en une matière résistant aux acides, par exemple des aciers spéciaux non corrodables, de l'acier vitrifié, du pyrex, des matières céramiques, des plastiques et, dans ce réacteur, par exemple à sa partie inférieure, on introduit du HCl gazeux à une vitesse suffisante pour que la température de réaction, à partir du moment où le HCl s'imprègne dans la masse organique, monte rapidement et dépasse 50°C. Ainsi, en règle générale, il n'est pas nécessaire de prévoir un refroidissement du réacteur quoique, bien entendu, la présence d'un tel dispositif ne soit en aucune façon interdite. En effet, il est préférable que la température de réaction ne dépasse pas certaines limites, par exemple 150°C ou, mieux, 110°C et si, pour modérer cette température on n'agit pas sur le taux de débit du HCl, on peut prévoir d'utiliser un dispositif de refroidissement, par exemple un manteau de circulation d'eau. On notera d'ailleurs à ce sujet que dans le présent procédé, la réaction s'accompagne souvent d'une liquéfaction partielle ou totale de la masse en traitement, un tel changement d'état élargissant considérablement les zones de contact thermique entre la masse en traitement et les parois du réacteur et, partant, l'efficacité du système de refroidissement.

Comme matières premières d'origine végétale ou animale se prêtant à la mise en œuvre de l'invention, on peut citer, d'une part, les produits de nature essentiellement protéiques et, d'autre part, ceux contenant, outre les protéines, des matières organiques non protéiques telles qu'hydrates de carbone, graisses, minéraux et autres. Dans la première de ces catégories, on citera plus particulièrement les déchets carnés, le sang desséché, les abats de poissons, les protéines microbiennes, les levures, les plumes, les poils, le crin, les cheveux, les ongles, la corne broyée et autres. Dans la seconde catégorie, on peut citer les protéines lactées (petit lait, caséine) et les tourteaux de graines oléagineuses comme l'arachide, le tournesol, le soya, le coton, le maïs, etc. De préférence, la teneur en protéines de la matière à traiter dépasse 40% en poids; elle est située avantageusement entre 50 et 100%. De préférence, pour assurer un bon contact entre le HCl gazeux et la matière à hydrolyser, on utilisera celle-ci sous forme divisée et, si elle ne l'est pas naturellement, on la réduira en coupeux ou en poudre par concassage, broyage ou autre travail mécanique. Si la matière se présente en poudre très fine, il peut être avantageux de la granuler en particules de dimensions de l'ordre de 100 μm à 5 mm par exemple, de

manière à éviter que, dans le cas d'un traitement statique (c'est-à-dire lorsque la matière soumise au passage du HCl n'est pas agitée mécaniquement), il se forme des canaux de ce gaz (renardage) dans la masse, une partie de celle-ci restant alors en dehors de la réaction. Une telle granulation peut se faire par les moyens habituels connus de l'homme de métier, par exemple dans un cylindre rotatif horizontal en présence d'un agent de granulation comme de l'urée ou un polysaccharide.

Lorsque la matière à hydrolyser a été imprégné de HCl (le rapport en poids de ce HCl à la matière protéique à hydrolyser étant compris de préférence entre 0,2:1 et 1:1 mais pouvant rester en deçà ou dépasser ces limites dans des cas spéciaux, notamment si la masse est pauvre en matières protéiques), on peut la maintenir pendant une période de l'ordre de $^1/_4$ d'heure à quelques heures (par exemple 5-6 heures) avec ou sans agitation à une température de l'ordre de 50 à 120°C afin de parfaire l'hydrolyse. Ces conditions ne sont cependant pas critiques car elles dépendent, non seulement de la nature de la matière en traitement, mais encore du degré d'hydrolyse auquel on désire parvenir. En effet, il est bien évident que le degré d'hydrolyse dépendra, d'une part, de la force de l'acide qui imprègne la masse à hydrolyser et, partant, du poids de celui-ci par rapport à la matière à hydrolyser et par rapport à la quantité d'humidité initiale de celle-ci, mais également des conditions d'hydrolyse (température et temps de réaction); plus celles-ci sont énergiques, plus le degré d'hydrolyse est prononcé.

Lorsque la matière à hydrolyser contient une proportion notable de composants non protéiques (cas, par exemple, des tourteaux de graines oléagineuses), ceux-ci subissent en général également un processus de décomposition plus ou moins poussé. Les polysaccharides, par exemple, peuvent s'hydrolyser en oligosaccharides plus ou moins hydrosolubles et en sucres. Dans de nombreux cas, il se forme des produits de dégradation fortement colorés dont une portion est insoluble dans l'eau et peut être retenue par filtration et des produits hydrosolubles qui, dans le filtrat, accompagnent l'hydrolysat de protéines et, dans certains cas, contribuent à améliorer ses propriétés (par exemple organoleptiques dans le cas d'hydrolysats utilisés comme produits alimentaires). Dans d'autres cas, ces produits de dégradation hydrosolubles sont éliminés comme indésirables, par exemple, par filtration sur charbon actif.

Lorsque la matière à hydrolyser a été imprégné de HCl comme décrit ci-dessus et maintenue au repos à la température choisie jusqu'à obtention de dégré d'hydrolyse désiré, on peut procéder a son dégazage et à l'élimination de l'excès de liquide. Bien entendu, l'éventualité d'un tel dégazage n'est à considérer que si la quantité de HCl mise en œuvre dépasse celle qui reste normalement fixée sous forme de chlorhydrates des fonctions aminées libérées par l'hydrolyse. Pour ce faire, on soumet le produit réactionnel à une pression réduite et on chauffe de manière qu'une notable proportion de HCl s'évapore sous forme de gaz, celui-ci pouvant être recyclé dans le procédé. Cette technique constitue un des avantages supplémentaires de l'invention, car elle permet de récupérer la plus grande partie du HCl utilisé en excédent de celui retenu dans la masse sous forme de chlorhydrates ce qui rend le procédé très économique. Lorsque la portion gazeuse disponible de HCl a été éliminée, on peut poursuivre l'évaporation de la phase aqueuse (qui distillera alors sous forme d'acide chlorhydrique aqueux à environ 20-25%) jusqu'à siccité, le résidu se présentant (notamment dans le cas de l'hydrolyse de matières essentiellement protéiques) comme une poudre sèche, non hygroscopique, stable à l'air, soluble dans l'eau et dépourvue d'odeur d'acide. Cette poudre contient du HCl vraisemblablement lié par formation de chlorhydrates avec les groupes amino des oligomères et acides aminés libérés par l'hydrolyse. On peut alors, à ce stade, transformer cet HCl lié en sel par dissolution de la poudre dans l'eau (ce qui donne une solution acide) puis adjonction de soude jusqu'à neutralité ce qui fournit une solution salée d'oligopeptides et autres acides aminés. Une telle solution peut être utilisée directement dans l'alimentation car elle ne contient, en général, qu'une proportion relativement faible de sel par comparaison avec les extraits correspondants obtenus par les voies traditionnelles. En effet, en raison de la faible quantité d'eau mise en jeu dans l'invention, le taux d'acide résiduel des hydrolysats qu'on en obtient est très inférieur à celui des hydrolysats correspondants de la technique antérieure lesquels résultent de l'emploi d'acide liquide concentré; ainsi, par voie de conséquence, la salinité des hydrolysats neutralisés obtenus suivant l'invention est réduite par rapport aux produits similaires connus. Ainsi, par exemple, dans la technique antérieure (voir les références susmentionnées) on utilise communément une partie d'acide chlorhydrique à 32% par partie de matières sèches à environ 50% de protéines. Par dégazage sous pression réduite (50°/20 Torr) on peut diminuer la teneur de l'acide au delà de celle de l'azéotrope dans de telles conditions, soit 21%. Pour 100 g d'acide (32%) de départ (32 g HCl + 68 g d'eau), on aura donc encore (en admettant que l'acide ne se soit pas fixé par ailleurs) 18 g de HCl (18/(68 + 18) = 21). Dans la présente invention, lorsqu'on utilise une matière protéique à, par exemple, 30% d'humidité, c'est-à-dire 43 g d'eau pour 100 g de matière sèche), le même dégazage conduit à une teneur résiduelle théorique maximum en HCl de 11,4 g, soit une économie de 6,6 g (plus de 30%).

Suivant une variante de mise en œuvre du procédé de l'invention, on peut effectuer la conversion des matières de départ en hydrolysats de protéines en travaillant en continu. On peut, pour cela, utiliser un réacteur de forme générale cylindrique équipé d'un dispositif interne dont la fonction est de déplacer longitudinalement la matière à traiter d'une des extrémités du cylindre (entrée par laquelle on introduit ladite matière) vers l'autre (sortie). Ce dispositif comprend un organe en forme de vis sans fin solidaire d'un axe longitudinal creux, perforé, dont la rotation provoque le déplacement progressif de la masse à hydrolyser. Du gaz HCl circulant le long de l'axe est éjecté à travers les perforations de celui-ci et pénètre ainsi régulièrement dans la masse en déplacement laquelle se contracte et même se liquéfie au fur et à mesure de son avancement dans le réacteur. La matière ainsi traitée est évacuée à la sortie du réacteur, soit par écoulement gravitationnel si la fluidité est suffisante, soit au moyen d'une autre vis de convoyage, et introduite dans une enceinte de dégazage où, sous pression réduite, la majeure partie du HCl gazeux est évaporé et renvoyé dans le tube axial du réacteur en vue de son recyclage. La masse dégazée est alors transportée dans une chambre de séchage où le restant de l'acide aqueux est chassé, soit par distillation, soit par pulvérisation de la solution dans un gaz chaud inerte, de l'air par exemple. La description d'un appareil convenant au processus décrit ci-dessus figure dans le document EP-A-81 201 182 (no. de publication: 52 896).

Les hydrolysats de protéines obtenus suivant le présent procédé peuvent être utilisés secs ou en solution aqueuses, comme tels ou après traitement ultérieurs. Comme tels, ils se prêtent à toutes les utilisations habituelles auxquelles sont habituellement destinés les hydrolysats de protéines de la technique antérieure, notamment dans l'alimentation animale ou humaine: produits d'aromatisation des fourrages, extraits de levures, préparation des bouillons pour sauces, potages et légumes et autres utilisations similaires.

Dans le domaine de l'industrie pharmaceutique, on peut soumettre ces hydrolysats à des processus de purifications afin d'en isoler certaines fractions oligomères plus spécifiques ou certains acides aminés purs. Les oligopeptides peuvent être d'ailleurs scindés en fragments de poids moléculaires inférieurs par les moyens habituels, y compris les fermentations et autres techniques biochimiques. Les méthodes de purification et d'isolation de certains composés spécifiques utilisés sont traditionnelles et comprennent la chromatographie sur colonne, sur séphadex, l'électrophorèse, l'isoélectric focusing, etc.

On remarquera encore, comme on l'a déjà fait auparavant, que le présent procédé présente un avantage considérable sur la technique antérieure, cet avantage étant lié à la possibilité (et ceci en tant que complément de mise en œuvre) de transformer directement le produit réactionnel en acides aminés, et cela de manière quasi quantitative. En effet, il suffit pour effectuer cette transformation que la quantité de HCl mise en jeu soit d'au moins 1 mole par mole d'acides aminés (le poids moléculaire moyen de ceux-ci, lors-qu'ils sont issus de matières protéiques telles que la corne, les cheveux, les plumes, étant de l'ordre de 120 D). Ainsi, en général, lorsqu'on a mis en jeu dans le présent procédé une quantité de HCl sec d'au moins 30% en poids (36,6 g pour 120 g de protéines considérés comme pures à 100%), le produit réactionnel peut être soumis, sans ajouter aucun réactif supplémentaire, à un traitement de chauffage sous pression, de relativement courte durée pour que les acides aminés encore liés sous forme d'oligopeptides soient entièrement libérés. Les conditions d'un tel traitement peuvent être identiques à celles relevées dans la littérature et qui concernent l'analyse quantitative des protéines dans un grand excès d'acide chlorhydrique aqueux, notamment 1-2 heures de chauffe à 170-180°C. Cependant, des conditions plus douces couplées à des temps réactionnels plus prolongés sont également applicables, par exemple plusieurs heures de chauffe sous pression à une température supérieure à 100°C, par exemple entre 120 et 170°C.

Cette technique est donc facilement applicable au traitement des hydrolysats de protéines issus du procédé de l'invention réalisé en continu, ces hydrolysats, liquéfiés, étant simplement pompés à la sortie du réacteur et introduits, tels quels, dans un autoclave où s'achèvera leur transformation pratiquement quantitative en acides aminés.

Les Exemples qui suivent illustrent l'invention de manière détaillée.

*Exemple 1*

Dans une colonne de 3,14 cm$^2$ de section et de 20 cm de long en pyrex (type réfrigérant à manchon, de circulation d'eau), on a placé 14,27 g de farine «semi-arachide» en granules d'environ 0,5 mm contenant 25% en poids d'humidité (10,27 g de matières sèches et 3,57 g d'eau). La teneur en protéine de cette farine était de 52% en poids, les 48% restants étant constitués de fibres cellulosiques, de corps gras, de matières minérales, d'amidon et de résidus non caractérisés.

On a fait circuler de bas en haut dans cette colonne du gaz chlorhydrique sec à un débit tel que, en 20 min, 3,07 g de HCl aient été absorbés. On a alors refroidi la matière qui s'est colorée et contractée en se liquéfiant partiellement en faisant circuler de l'eau à 10°C dans le manchon réfrigérant et on a ajouté encore 0,4 g de HCl gazeux. Puis, à pression ordinaire, on a chauffé 1 h à 45°C ce qui a occasionné le départ de 0,96 g de HCl. On a alors réduit la pression à 20 Torr au moyen d'une trompe à eau et procédé à un dégazage-évaporation à 45-50°C ce qui a occasionné le départ de 3,82 g de HCl et d'eau, laissant ainsi 12,85 g d'une poudre sèche, non hygroscopique, de couleur foncé. On a repris cette poudre dans 38 ml d'eau où elle s'est dissoute à 60% environ. Après filtration (poids du résidu séché 4,28 g) on a neutralisé cette solution à pH 7 avec de la soude caustique normale (utilisé 8,36 ml de NaOH N/10).

L'odeur et le goût du produit ainsi obtenu étant satisfaisant, et son taux de salinité n'étant que d'environ 3-3,5%, on a pu l'utiliser directement comme ingrédient aromatisant pour la fabrication de potages instantanés.

*Exemple 2*

On a essoré des plumes de poulet jusqu'à une teneur en humidité de 60-65% en poids et on a introduit 27,44 g de ces plumes dans la colonne de l'Exemple précédent. On a fait ensuite circuler 45 min du HCl gazeux de bas en haut de la colonne, de manière que la température atteigne 103°C après quelques minutes et décroisse lentement jusqu'à 45° après 30 min. La matière ayant absorbé 13,21 g de HCl s'est transformé en un liquide rouge homogène qu'on a évaporé 1,5 h à 70°C sous 20 Torr. On a ainsi obtenu 11,43 g de poudre foncée se dissolvant pratiquement entièrement dans 60 ml d'eau à 40°C (résidu de filtration 0,22 g). On a neutralisé l'acidité de cette solution à pH 7 avec de la soude normale, l'acidité correspondant à la présence de 1,78 g de HCl.

*Exemple 3*

Dans un réacteur tubulaire de 1,5 l en pyrex muni d'un agitateur, on a placé 368 g de plumes de poulet (14,9% d'azote total) à environ 60% d'humidité (147 g de matières sèches). On a fait circuler 30 min de bas en haut du réacteur du gaz chlorhydrique au débit de 4-5 l/min. On a observé une montée en température jusqu'à 100° après quelques minutes, puis une décroissance progressive jusqu'à environ 60°C. On a ainsi obtenu 522 g d'un liquide rouge foncé (quantité de HCl absorbée 154,2 g) qu'on a placée dans un rotavapor et évaporée 2,5 h à 60-65°C/20 Torr. On a ainsi obtenu 118,7 g de poudre brune inodore et récupéré 333 g de solution d'acide chlorhydrique à 25%. Après séchage poussé de cette poudre (110°/P$_2$O$_5$), on en a obtenu 117 g dont le taux d'humidité résiduelle (Karl Fischer) n'était que de 0,5%. Par analyse, on a mesuré pour cette poudre sèche un taux d'azote total de 18,8% et un taux d'azote sous forme d'amines libres de 4,12%.

On a dissous 15 g de cette poudre dans 150 ml d'eau (pH mesuré 1,7), on a filtré et on a neutralisé 50 ml de la solution par NaOH N/10 à pH 5,8. A ce pH, le HCl lié est entièrement transformé en NaCl, la quantité de soude additionnelle nécessaire pour monter le pH à 7 correspondant à la salification des groupes carboxyliques des acides aminés et oligopeptides présents dans la solution. Une telle neutralisation par NaOH correspond à un taux de salinité en poids dans le produit sec d'environ 17%.

*Exemple 4*

On a traité 228 g de plumes de poulet à 44% d'humidité (128 g de matière sèche et 100,5 g d'eau) par 89,2 g de HCl gazeux en 2 heures dans les mêmes conditions qu'à l'Exemple précédent et obtenu 317 g d'un liquide visquex (montée en température à 100° après 10 min, puis décroissance progressive). Après 2 heures d'agitation à pression ambiante et 50°C on a chauffé 2,5 h à 65-70°C/20 Torr ce qui a occasionné une perte de poids (départ de HCl et d'eau) de 139 g. On a ainsi obtenu une poudre rougeâtre, 136 g après séchage à 110°C sur P$_2$O$_5$. Cette poudre titrait 20,11% d'acide (calculé comme HCl) par neutralisation à la soude caustique à pH 7. Par analyse, le taux réel d'HCl était de 13,18%, la différence provenant de la neutralisation des groupes COOH des acides aminés. Azote total 12,66%; azote des groupes NH$_2$ libres 3,73%.

*Exemple 5*

On a essoré dans une centrifugeuse des plumes de poulet humides de manière à éliminer l'eau déposée à leur surface. On a ainsi obtenu des plumes dont la teneur en eau était de 25% en poids.

On a traité 0,467 kg de ces plumes (0,35 kg de produit sec) dans un ballon rotatif (ROTAVAPOR) de 5 l par du HCl sec intorduit à une cadence suffisante pour que la température s'élève en 3$^1$/$_2$ min à 90 - 100°C. A ce stade, on constate un changement d'état (contraction) et de couleur (virage au rouge). Après 1 heure, on arrête l'addition; la masse s'était transformé en un liquide épais ayant absorbé 145 g (1,36 equiv) de HCl. Par analyse, on a constaté que 56% de la quantité d'acide théorique restait fixée dans la masse.

On a transféré le liquide dans un autoclave qu'on a purgé à l'azote, après quoi on a chauffé le tout 2 heures à 180°C. On a repris le résidu dans 1 l d'eau distillée, on a filtré les substances insolubles puis on a prélevé un aliquot qu'on a analysé en termes de concentration en solides dissous et d'acides aminés (Analyse HPLC = high performance liquid chromatography) en % en poids par rapport à ces solides considérés comme matière sèche. On a trouvé que le rendement en solides dissous était de l'ordre de 90% de la matière de départ, l'analyse des acides aminés figurant dans le tableau ci-dessous.

*Essai comparatif*

A titre de comparaison avec l'état de la technique, on a traité dans un autoclave 10 g des plumes de l'Exemple 5 (7,5 g à sec) par 12 g de HCl à 24% (2,88 g de HCl sec, 1,26 equiv.) 2 heures à 180°C. Puis, comme ci-dessus, on a procédé à l'analyse des acides aminés libérés, les résultats étant également exprimés en ‰ du poids de la matière de départ. Les résultats figurent au tableau ci-dessous.

*Analyse des acides aminés (‰ en poids)*

| Amino-acide | Exemple 5 | Exemple comparatif |
|---|---|---|
| Asp | 53,6 | 15,26 |
| Glu | 82,2 | 32,86 |
| Ser | 68,6 | 3,24 |
| His | 4,5 | 1,31 |
| Gly | 54,1 | 20,13 |
| Thr | 36,0 | 7,40 |
| Arg | 53,4 | 5,23 |
| Ala | 31,8 | 43,30 |
| Tyr | 19,8 | 3,98 |
| Met | 2,9 | 1,30 |
| Val | 64,9 | 33,7 |
| Ph. Al | 36,7 | 16,4 |
| Ileu | 40,9 | 18,6 |
| Leu | 62 | 27,9 |
| Lys | 19 | 3,25 |
| Cys | 71,3 | — |

On voit, par les résultats qui précèdent, qu'en utilisant une quantité d'acide pratiquement équivalente à celle de l'essai effectué dans les conditions de l'invention (Exemple 5) mais sous forme de solution aqueuse (essai comparatif), on ne parvient qu'à un faible rendement en acides aminés, le taux de l'hydrolyse étant, de toute évidence, très inférieur.

**Revendications**

1. Procédé pour hydrolyser des matières protéiques d'origine animale ou végétale au moyen d'acide chlorhydrique gazeux de manière à les transformer en une masse hydrosoluble, caractérisé par le fait que la teneur en humidité des matières protéiques mises en œuvre dépasse 20% en poids, et qu'on leur ajoute le HCl gazeux, à pression atmosphérique, à un débit suffisant pour que la température du milieu réactionnel dépasse, au moins à un istant quelconque de l'addition, la valeur de 50°C.

2. Procédé suivant la revendication 1, caractérisé par le fait qu'on met en œuvre, en poids par rapport à la matière protéique sèche, de 20 à 100% de HCl.

3. Procédé suivant la revendication 1, caractérisé par le fait que la teneur en humidité de la matière à traiter est de 20 à 80% en poids.

4. Procédé suivant la revendication 1, caractérisé par le fait que la température réactionnelle maximum est de 50 à 150°C.

5. Procédé suivant la revendication 1, caractérisé par le fait que la granulométrie de la matière à traiter est de 100 µm à 5 mm.

6. Procédé suivant la revendication 1, caractérisé par le fait que la teneur en protéines de la matière à traiter est supérieure à 40% en poids.

7. Procédé suivant la revendication 1, caractérisé par le fait qu'après imprégnation de la masse par le HCl et poursuite de la réaction jusqu'au degré d'hydrolyse désiré, on dégaze la masse de son excédent de HCl par évaporation, celui-ci étant récupéré en vue de son recyclage dans le procédé.

8. Procédé suivant la revendication 1, caractérisé par le fait que les matières à hydrolyser sont choisies parmi les déchets carnés, les farines de poissons, les protéines bactériennes et de levures, les résidus des eaux usées, les protéines lactées, les protéines kératiniques telles que corne, ongles, poils et plumes et les protéines végétales telles que tourteaux de graines oléagineuses.

9. Procédé suivant la revendication 7, caractérisé par le fait qu'après dégazage, on sèche la matière hydrolysée de manière à en éliminer tout l'acide chlorhydrique non lié chimiquement.

10. Procédé suivant la revendication 9, caractérisé par le fait qu'on redissout ensuite la matière sèche dans l'eau et qu'on neutralise le HCl lié par la soude jusqu'à un pH de 5,5 à 7, la salinité du produit ainsi neutralisé étant compatible avec son emploi dans le domaine alimentaire.

11. Procédé suivant la revendication 1, caractérisé par le fait qu'après l'addition du HCl gazeux, on chauffe la masse sous pression en autoclave à une température supérieure à 100°C, ce traitement, ne nécessitant aucun réactif additionnel, provoquant son hydrolyse pratiquement totale en amino-acides.

12. Procédé suivant la revendication 11, caractérisé par le fait qu'on chauffe 2 heures entre 160 et 200°C.

13. Hydrolysat de protéines obtenu suivant le procédé d'une des revendications précédentes.

14. Utilisation de l'hydrolysat suivant la revendication 13 comme ingrédient alimentaire dans l'alimentation animale ou humaine.

15. Utilisation de l'hydrolysat suivant la revendication 13 comme produit de départ pour la préparation, en pharmacie, d'oligopeptides et d'acides aminés.

**Patentansprüche**

1. Verfahren zum Hydrolysieren von Proteinmaterialien tierischer oder pflanzlicher Herkunft mittels gasförmiger Salzsäure, so dass diese in eine wasserlösliche Masse überführt werden, dadurch gekennzeichnet, dass der Feuchtgehalt der verwendeten Proteinmaterialien 20 Gew.-% überschreitet, dass man ihnen ein gasförmiges HCI bei Atmosphärendruck hinzufügt, und zwar in einer Menge, die ausreicht, dass die Temperatur des Reaktionsmilieus wenigstens zu irgendeinem Zeitpunkt der Zugabe den Wert von 50°C überschreitet.

2. Verfahren nach Anspruch 1, dadurch gekennzeichnet, dass man 20 bis 100% HCI bezogen auf das Gewicht des trockenen Proteinmaterials verwendet.

3. Verfahren nach Anspruch 1, dadurch gekennzeichnet, dass der Feuchtgehalt des zu behandelnden Materials zwischen 20 und 80 Gew.-% ist.

4. Verfahren nach Anspruch 1, dadurch gekennzeichnet, dass die maximale Reaktionstemperatur zwischen 50 und 150°C ist.

5. Verfahren nach Anspruch 1, dadurch gekennzeichnet, dass die Kornverteilung des zu behandelnden Materials zwischen 100 µm und 5 mm ist.

6. Verfahren nach Anspruch 1, dadurch gekennzeichnet, dass der Proteingehalt des zu behandelnden Materials höher als 40 Gew.-% ist.

7. Verfahren nach Anspruch 1, dadurch gekennzeichnet, dass nach der Impregnation der Masse mit HCI und Durchführung der Reaktion bis zum gewünschten Hydrolysegrad man die Masse durch Verdampfung von überschüssigem HCI entgast, wobei dieses zur Rückführung in das Verfahren wiedergewonnen wird.

8. Verfahren nach Anspruch 1, dadurch gekennzeichnet, dass die zu hydrolysierenden Materialien aus den Fleischabfällen, Fischmehlen, bakteriellen Proteinen und Hefeproteinen, Abwasserresten, Milchproteinen, den Proteinen des Keratins, wie Horn, Nägel, Haut und Federn, und pflanzlichen Proteinen, wie den Kuchen von Ölsamen, ausgewählt sind.

9. Verfahren nach Anspruch 7, dadurch gekennzeichnet, dass man nach der Entgasung das hydrolysierte Material trocknet, um jegliche, chemisch nichtgebundene Salzsäure zu beseitigen.

10. Verfahren nach Anspruch 9, dadurch gekennzeichnet, dass man dann das trockene Material in Wasser wiederum löst und dass man die gebundene HCI durch Natron bis zu einem pH-Wert von 5,5 bis 7 neutralisiert, wobei der Salzgehalt des so neutralisierten Produkts mit seiner Verwendung im Nahrungsmittelbereich verträglich ist.

11. Verfahren nach Anspruch 1, dadurch gekennzeichnet, dass man nach dem Zusatz der gasförmigen Salzsäure die Masse unter Druck im Autoklaven bei einer Temperatur oberhalb von 100°C erwärmt, wobei diese Behandlung kein zusätzliches Reaktionsmittel bedingt und eine praktisch vollkommene Hydrolyse in Aminosäuren hervorruft.

12. Verfahren nach Anspruch 11, dadurch gekennzeichnet, dass man zwei Stunden lang zwischen 160 und 200°C erwärmt.

13. Hydrolysat von Proteinen, das nach dem Verfahren gemäss einer der vorhergehenden Ansprüche erhalten worden ist.

14. Verwendung des Hydrolysates gemäss Anspruch 13 als essbarer Bestandteil in tierischer oder menschlicher Nahrung.

15. Verwendung des Hydrolysates gemäss Anspruch 13 als Ausgangsprodukt für die Bereitung von Oligopeptiden und Aminosäuren in der Pharmazie.

**Claims**

1. Process for hydrolyzing protein materials of animal or vegetal origin by means of gaseous hydrochloric acid so as to convert them into a hydrosoluble mass, characterized in that the moisture content of the protein materials brought into play exceeds 20% by weight, and that the gaseous HCI is added under atmospheric pressure, at a rate sufficient for enabling the temperature of the reaction to exceed, at least at some moment of the addition, the value of 50°C.

2. Process according to claim 1, characterized in that the weight of HCI used relative to the dry protein material is 20 to 100%.

3. Process according to claim 1, characterized in that the moisture content of the material to be treated is 20 to 80% by weight.

4. Process according to claim 1, characterized in that the maximum reaction temperature is 50 to 150°C.

5. Process according to claim 1, characterized in that the particle size of the material to be treated is 100 µm to 5 mm.

6. Process according to claim 1, characterized in that the protein content of the material to be treated is above 40% by weight.

7. Process according to claim 1, characterized in that after the mass has been impregnated by HCI and the reaction has been pursued up to the desired hydrolysis state, the mass is degassed by removing the excess of HCI by evaporation, the latter being recovered for being recycled in the process.

8. Process according to claim 1, characterized in that the material to be hydrolyzed is selected among meat refuses, fish meals, bacteria and yeast proteins, residues from waste waters, milk proteins, keratin proteins such as corn, nails, hairs and feathers and vegetal proteins such as oily seed grains.

9. Process according to claim 7, characterized in that after degassing, the hydrolyzed material is dried so as to eliminate all the hydrochloric acid not chemically bound thereto.

10. Process according to claim 9, characterized in that the dry material is thereafter dissolved into water and that the bound HCI is neutralized by sodium hydroxide up to a pH of 5.5 to 7, the saltiness of the product thus neutralized being compatible for its use in the food industry.

11. Process according to claim 1, characterized in that after the addition of gaseous HCI, the mass is heated under pressure in an autoclave at a temperature above 100°C, this treatment, which needs no additional reagent, causing it to hydrolize substantially completely into amino acids.

12. Process according to claim 1, characterized in that the material is heated for 2 hours between 160 and 200°C.

13. Hydrolysate of proteins obtained according to the process of one of the previous claims.

14. The use of the hydrolysate according to claim 13 as a food ingredient for animals or mankind.

15. The use of hydrolysate according to claim 13 as a starting material for the preparation, in the pharmaceutical industry, of oligopeptides and amino acids.